# EUROPÄISCHE PATENTSCHRIFT

(11) **EP 2 518 465 B1**
(45) Veröffentlichungstag und Bekanntmachung des Hinweises auf die Patenterteilung: **31.08.2016**
(21) Anmeldenummer: 12165997.3
(22) Anmeldetag: 27.04.2012
(51) Int. Cl.: G01M 3/00

(54) **Leckageerkennung**
Leakage detection
Détection des fuites

(30) Priorität: 29.04.2011 DE 102011100096
(43) Veröffentlichungstag der Anmeldung: 31.10.2012
(73) Patentinhaber: Deutsches Zentrum für Luft- und Raumfahrt e.V., 51147 Köln (DE)
(72) Erfinder: Bölke, Jens, 21680 Stade (DE); Stefaniak, Daniel, 31224 Peine (DE); Hakan, Ucan, 21684 Stade (DE); Christian, Krombholz, 21614 Buxtehude (DE)
(74) Vertreter: Aisch, Sebastian

(56) Entgegenhaltungen:
- EP-A2- 1 109 002
- US-A- 4 841 149
- US-A1- 2004 003 914

## Beschreibung

Die Erfindung betrifft ein Verfahren zum Erkennen einer Leckage an einem vakuumabgedichteten Aufbau, der mittels einer Drucksenke evakuierbar ist. Die Erfindung betrifft auch eine Anordnung hierzu.

Bei der Herstellung von Faserverbundbauteilen können verschiedene Herstellungsverfahren unterschieden werden, die je nach zu Grunde liegender Situation ihre entsprechenden Vorteile ausspielen können. Den meisten Herstellungsverfahren liegt die Fertigung mittels Kompaktierung durch Umgebungsdruck oder zusätzlicher Druckbeaufschlagung während der Bauteilaushärtung zugrunde. Dabei wird ein Faserhalbzeug in ein Formwerkzeug eingebracht, das dann vakuumdicht abgeschlossen und mittels einer Drucksenke evakuiert wird. Hat sich ein entsprechender Differenzdruck zum Umgebungsdruck eingestellt, so wird das Faserhalbzeug mit einem Matrixmaterial infiltriert, sofern dies noch nicht geschehen ist, und anschließend ausgehärtet.

Ein häufig auftretendes Problem bei derartigen vakuumabgedichteten Aufbauten ist jedoch die nicht 100%-ig zuverlässige Dichtigkeit, so dass es an Leckagestellen während der Bauteilaushärtung zu Fehlstellen an den Bauteilen kommen kann, die dann später in Handarbeit nachgebessert oder im schlimmsten Fall als Ausschuss ausgesondert werden müssen. Denn gerade bei Faserverbundbauteilen können Fehlstellen innerhalb des Bauteils zu einem massiven Einbruch der geforderten Bauteilqualitäten, wie beispielsweise Steifigkeit oder Zugfestigkeit, führen.

Aufgrund der Komplexität der Verfahren zur Herstellung von Faserverbundbauteilen werden auch heute noch viele Arbeitsschritte manuell durchgeführt, was die relativ hohen Kosten bei der Produktion derartiger Bauteile erklärt. Zur Erkennung von Leckagestellen ist dabei beispielsweise ein akustisches Suchverfahren bekannt, bei dem ein Bediener mittels eines Kopfhörers und eines akustischen Sensors das Bauteil absucht und anhand eines Geräusches bzw. Rauschens, das durch eine Leckagestelle hervorgerufen wird, eben eine solche erkennen kann.

Dieses akustische Suchverfahren hat jedoch den Nachteil, dass es manuell von einem Bediener durchgeführt werden muss und sich somit zur zumindest teilweisen Automatisierung des Herstellungsprozesses nicht eignet. Darüber hinaus ist der Zeitaufwand, der benötigt wird, um das gesamte Bauteil sicher abzusuchen, derart groß, dass sich dieses Verfahren meist nur bei teuren und hochwertigen Bauteilen rechtfertigen lässt. Für die zumindest teilweise Automatisierung des Herstellungsprozesses von Faserverbundbauteilen ist es jedoch notwendig, dass ein solches Verfahren entweder automatisiert durchgeführt werden kann oder zumindest dem Bediener die Möglichkeit eröffnet, schnell und sicher eine Leckagestelle erkennen zu können. Nur so kann bei der Automatisierung die notwendige Prozesssicherheit gewährleistet werden.

EP1109002 offenbart ein Verfahren zum Erkennen einer Leckage

### Aufgabe

Es ist daher Aufgabe der vorliegenden Erfindung ein verbessertes Verfahren und eine Anordnung hierzu anzugeben, mit der eine Leckage an einem vakuumabgedichteten Aufbau schnell und zuverlässig erkannt werden kann.

### Lösung

Die Aufgabe wird mit einem Verfahren nach Anspruch 1 und einer Annordnung nach Anspruch 8 gelöst.

Demnach wird vorgeschlagen, dass ein vakuumabgedichteter Aufbau, der mittels einer Drucksenke evakuiert wird oder ist, mit Hilfe von mindestens einem thermografischen Bildsensor aufgenommen wird. Aus den daraus resultierenden thermografischen Bilddaten lässt sich dann die Temperatur des vakuumabgedichteten Aufbaus ableiten, wobei Temperaturdifferenzen an dem vakuumabgedichteten Aufbau aus dem thermografischen Bilddaten erkenn- und ermittelbar sind. In Abhängigkeit von den ermittelten Temperaturdifferenzen lässt sich dann eine Leckagestelle an dem vakuumabgedichteten Aufbau erkennen. So führt eine Leckage in dem vakuumabgedichteten Aufbau zu einer Temperaturveränderung des vakuumabgedichteten Aufbaus an der Leckagestelle, so dass sich die Temperatur am Ort der Leckagestelle von der Temperatur des restlichen Teils des vakuumabgedichteten Aufbaus unterscheidet. Dabei ist es ganz besonders vorteilhaft, wenn die Temperatur des vakuumabgedichteten Aufbaus oder zumindest eines Teils davon gegenüber der Umgebungsluft des Aufbaus durch mindestens eine Wärmequelle oder Wärmesenke verändert wird. Befindet sich nun eine Leckagestelle in dem vakuumabgedichteten Aufbau, so strömt an dieser Stelle Umgebungsluft in den Aufbau, weil sich die Temperatur der Umgebungsluft von der Temperatur des vakuumabgedichteten Aufbaus aufgrund der Wärmequelle oder Wärmesenke unterscheidet. An der Leckagestelle nimmt der vakuumabgedichtete Aufbau die Temperatur der Umgebungsluft an, was als Temperaturdifferenz in den thermografischen Bilddaten erkennbar ist. Durch diese Temperaturdifferenz kann dann auf eine Leckagestelle geschlossen werden.

Ganz besonders vorteilhaft ist es dabei, wenn der vakuumabgedichtete Aufbau mit Hilfe einer Wärmequelle bzw. eines Wärmestrahlers gegenüber der Umgebungsluft erwärmt wird, so dass durch eine Leckagestelle einströmende Umgebungsluft am Ort der Leckagestelle eine Abkühlung des vakuumabgedichteten Aufbaus verursacht, der als sogenannter "Cold Spot" in den thermografischen Bilddaten erkennbar ist.

Eine weitere vorteilhafte Ausführungsform besteht darin, die Umgebungslufttemperatur gegenüber der Temperatur des vakuumabgedichteten Aufbaus zu verändern, wodurch aufgrund einer Leckage einströmende Umgebungstemperatur sich von der Temperatur des vakuumabgedichteten Aufbaus unterscheidet und somit zu einer Temperaturveränderung am vakuumabgedichteten Aufbau führt. Eine solche Temperaturveränderung bzw. Temperaturdifferenz ist dann als "Cold Spot" oder "Hot Spot" in den thermografischen Bilddaten erkennbar.

Anhand der Position der Temperaturdifferenz an dem vakuumabgedichteten Aufbau lässt sich dann vorteilhafterweise die Position der Leckage erkennend ableiten, so dass nicht nur die Leckage selbst erkannt werden kann, d.h. das Vorhanden- oder Nichtvorhandensein, sondern auch, an welcher Stelle sich die Leckage an dem vakuumabgedichteten Aufbau befindet. Das Ermitteln der Position bzw. des Ortes der Leckage an dem vakuumabgedichteten Aufbau lässt sich dabei selbstverständlich auch automatisiert mit Hilfe einer Recheneinheit durchführen.

Mit Hilfe einer solchen Recheneinheit lässt sich selbstverständlich auch die Leckage an sich aus den thermografischen Bilddaten ermitteln, beispielsweise mit Hilfe eines Bilderkennungsprogramms. Die Recheneinheit ist dabei derart eingerichtet, dass sie die Temperaturdifferenzen aus den thermografischen Bilddaten ermittelt und anschließend in Abhängigkeit von den Temperaturdifferenzen eine Leckage erkennt. So ist es denkbar, dass beispielsweise erst dann auf das Vorhandensein einer Leckage geschlossen wird, wenn die Temperaturdifferenz einen bestimmten Schwellwert übersteigt, der nicht mehr mit normalen Temperaturschwankungen zu rechtfertigen ist.

Vorteilhafterweise werden die aufgenommenen thermografischen Bilddaten auf einer Anzeigeeinheit dargestellt.

Darüber hinaus wird die Aufgabe auch gelöst mit einer Anordnung zur Durchführung des Verfahrens umfassend einen vakuumabgedichteten Aufbau, der mittels einer Drucksenke evakuierbar ist, mindestens einen thermografischen Bildsensor, der zum Aufnehmen von thermografischen Bilddaten von dem evakuierten, vakuumabgedichteten Aufbau eingerichtet ist, und eine Recheneinheit, die zum Ermitteln von Temperaturdifferenzen an dem vakuumabgedichteten Aufbau aus den thermografischen Bilddaten und zum Erkennen einer Leckage an dem vakuumabgedichteten Aufbau in Abhängigkeit von den ermittelten Temperaturdifferenzen eingerichtet ist.

Vorteilhafte Ausgestaltungen der Anordnung finden sich in den entsprechenden Unteransprüchen.

So kann die Anordnung mindestens eine Wärmequelle oder Wärmesenke umfassen, die zum Verändern der Temperatur des vakuumabgedichteten Aufbaus gegenüber der Umgebungsluft des Aufbaus eingerichtet ist. Eine derartige Wärmequelle kann beispielsweise ein Heizstrahler oder eine Wärmelampe sein.

Die Anordnung kann in einer alternativen Ausführungsform auch eine Wärmequelle oder Wärmesenke umfassen, die zum Verändern der Umgebungslufttemperatur gegenüber der Temperatur des vakuumabgedichteten Aufbaus eingerichtet ist.

In beiden Fällen wird erreicht, dass durch eine Leckage einströmende Umgebungsluft eine Temperatur aufweist, die sich von der Temperatur des Aufbaus unterscheidet, wodurch es zu einer Temperaturveränderung an der Leckagestelle kommt, die mit Hilfe der thermografischen Bildsensoren und den aufgenommenen thermografischen Bilddaten ermittelbar ist.

Die Erfindung wird anhand der beigefügten Figuren beispielhaft näher erläutert. Es zeigen:
- Figur 1 -: schematische Darstellung der Anordnung zur Erkennung einer Leckage;
- Figur 2 -: schematische Darstellung von thermografischen Bilddaten mit Leckage.

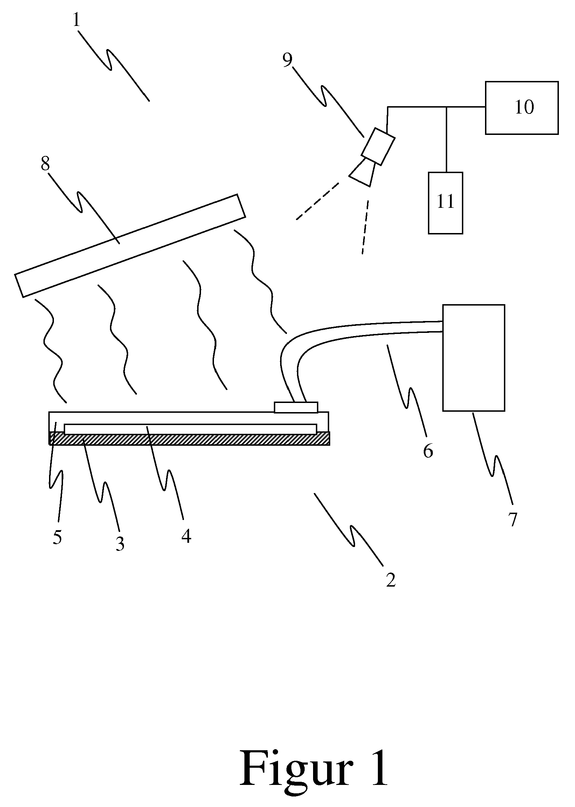

Figur 1 zeigt eine Anordnung 1 zur Erkennung einer Leckage an einem vakuumabgedichteten Aufbau 2. Der vakuumabgedichtete Aufbau 2 besteht in diesem Ausführungsbeispiel aus einem formgebenden Werkzeug 3, einem Fasermaterial 4 sowie einer Vakuumverpackung 5. Das Ganze wird dann unter anderem auch mit einem Siegelband vakuumdicht verschlossen.

An dem vakuumabgedichteten Aufbau 2 ist eine Evakuierungsleitung 6 angeordnet, die mit einer Drucksenke 7 verbunden ist. Mit Hilfe der Drucksenke 7 kann über die Evakuierungsleitung 6 der Innenraum des vakuumabgedichteten Aufbaus 2 evakuiert werden, so dass sich unter anderem ein Feinvakuum einstellen lässt.

Oberhalb des vakuumabgedichteten Aufbaus 2 ist eine Wärmequelle 8, in diesem Ausführungsbeispiel ein Wärmestrahler, angeordnet, der hinsichtlich seiner Wärmeleistung so ausgerichtet ist, dass er den vakuumabgedichteten Aufbau vollständig erwärmt. Denkbar ist natürlich auch, dass mehrere Wärmestrahler zusammen den vakuumabgedichteten Aufbau 2 erwärmen. Darüber hinaus ist es auch denkbar, dass die Veränderung der Temperatur des vakuumabgedichteten Aufbaus mit Hilfe einer Wärmesenke erfolgt.

Darüber hinaus umfasst die Anordnung 1 einen thermografischen Bildsensor 9, der so ausgerichtet ist, dass er den vakuumabgedichteten Aufbau 2 erfasst und somit thermografische Bilddaten von dem vakuumabgedichteten Aufbau 2 aufnimmt. Mit Hilfe eines thermografischen Bildsensors können beispielsweise Bilddaten aufgenommen werden, bei denen die Oberflächentemperatur der aufgenommenen Objekte anhand von Farbverläufen dargestellt wird.

In Figur 1 ist der thermografische Bildsensor 9, beispielsweise eine thermografische Videokamera, mit einem Wiedergabegerät oder Display 10 verbunden, auf dem die aufgenommenen thermografischen Bilddaten der Kamera 9 direkt dargestellt werden. Darüber hinaus ist der thermografische Bildsensor 9 mit einer Recheneinheit 11 verbunden, welche die thermografischen Bilddaten empfängt und mit Hilfe eines Bilderkennungsprogramms auswertet.

Mit Hilfe der Recheneinheit 11, auf dem ein Bilderkennungsprogramm läuft, werden die thermografischen Bilddaten des thermografischen Bildsensors 9 analysiert und hinsichtlich Temperaturdifferenzen untersucht. Wird beispielsweise festgestellt, dass die an sich gleichmäßig erwärmte Oberfläche des vakuumabgedichteten Aufbaus 2 an zumindest einer Stelle einen Temperaturabfall aufzeigt, so ist dies ein Indiz dafür, dass an dieser Stelle kalte Umgebungsluft in den vakuumabgedichteten Aufbau 2 hineinströmt und an dieser Stelle den vakuumabgedichteten Aufbau abkühlt. Diese Temperaturdifferenz, die aufgrund der einströmenden Umgebungstemperatur entsteht, ist ein Hinweis auf eine Leckagestelle, die dann auch automatisiert von der Recheneinheit 11 erkannt werden kann.

Mit dieser Anordnung 1 ist es somit möglich, Faserverbundbauteile, die in Serie hergestellt werden sollen, vollautomatisiert hinsichtlich der Dichtigkeit des gesamten vakuumabgedichteten Aufbaus 2 zu untersuchen und auszuwerten, was gerade bei der Herstellung von Faserverbundbauteilen die Prozesssicherheit wesentlich erhöht und die Erkennungsrate steigert und die Erkennungsgeschwindigkeit senkt.

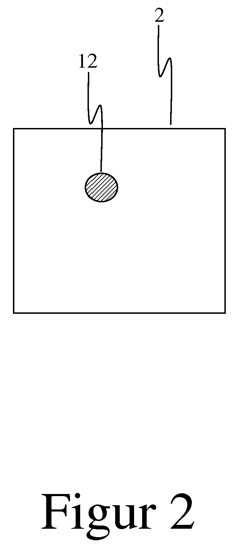

Figur 2 zeigt schematisch die Darstellung von thermografischen Bilddaten eines vakuumabgedichteten Aufbaus 2, der in etwa mittig eine Leckagestelle 12 aufweist. Der gesamte vakuumabgedichtete Aufbau 2 wurde dabei mittels einer Wärmequelle erwärmt, so dass er eine höhere Oberflächentemperatur gegenüber der Umgebungsluft aufweist. Aufgrund der in etwa mittig des vakuumabgedichteten Aufbaus 2 bestehende Leckagestelle 12 strömt kältere Umgebungsluft in den vakuumabgedichteten Aufbau 2 hinein, so dass sich an dieser Stelle der vakuumabgedichtete Aufbau 2 gegenüber dem restlichen Teil des Aufbaus 2 abkühlt. Diese Temperaturdifferenz ist in Figur 2 an der Leckagestelle 12 in Form einer schraffierten Fläche dargestellt.

Durch das Abkühlen der Oberfläche des vakuumabgedichteten Aufbaus 2 an der Leckagestelle erfolgt ein verändertes Bild in den thermografischen Bilddaten, so dass auch mit Hilfe einer Recheneinheit und eines Bilderkennungsprogramms derartige Kaltstellen aufgefunden werden können, woraus dann schließlich nur die Leckagestelle selber, sondern auch die Position der Leckagestelle ermittelbar ist.

Je nachdem, ob nun aufgrund der Leckagestelle gegenüber dem vakuumabgedichteten Aufbau wärmere oder kältere Umgebungsluft in den vakuumabgedichteten Aufbau einströmt, lässt sich die Leckagestelle aufgrund der daraus resultierenden Temperaturdifferenz an der Oberfläche des vakuumabgedichteten Aufbaus erkennen. Damit lassen sich Leckagestellen an derartigen Aufbauten nicht nur schnell und sicher erkennen, sondern auch Aufbauten beliebiger Größe ohne Qualitäts- und Zeitverlust untersuchen.

## Patentansprüche

1. Verfahren zum Erkennen einer Leckage (12) an einem vakuumabgedichteten Aufbau (2) bei der Herstellung eines Faserverbundbauteils, der mittels einer Drucksenke (7) evakuierbar ist, wobei der vakuumabgedichtete Aufbau ein formgebendes Werkzeug, ein Fasermaterial sowie eine Vakuumverpackung aufweist, **gekennzeichnet durch** Aufnehmen von thermografischen Bilddaten von dem evakuierten, vakuumabgedichteten Aufbau (2) durch mindestens einen thermografischen Bildsensor (9), Ermitteln von Temperaturdifferenzen an dem vakuumabgedichteten Aufbau (2) aus den thermografischen Bilddaten und Erkennen einer Leckage (12) an dem vakuumabgedichteten Aufbau (2) in Abhängigkeit von den ermittelten Temperaturdifferenzen.

2. Verfahren nach Anspruch 1, **gekennzeichnet durch** Verändern der Temperatur des vakuumabgedichteten Aufbaus (2) gegenüber der Umgebungsluft des Aufbaus (2) **durch** mindestens eine Wärmequelle (8) oder -senke.

3. Verfahren nach Anspruch 2, **gekennzeichnet durch** Erhöhen der Temperatur des vakuumabgedichteten Aufbaus (2) **durch** einen auf dem vakuumabgedichteten Aufbau (2) ausgerichteten Wärmestrahler (8).

4. Verfahren nach Anspruch 1, **gekennzeichnet durch** Verändern der Umgebungslufttemperatur gegenüber der Temperatur des vakuumabgedichteten Aufbaus (2) **durch** mindestens eine Wärmequelle oder -senke.

5. Verfahren nach einem der vorhergehenden Ansprüche, **gekennzeichnet durch** Erkennen der Position der Leckage (12) in Abhängigkeit von der Position der Temperaturdifferenzen an dem vakuumabgedichteten Aufbau (2).

6. Verfahren nach einem der vorhergehenden Ansprüche, **gekennzeichnet durch** Ermitteln der Temperaturdifferenzen an dem vakuumabgedichteten Aufbau (2) aus den thermografischen Bilddaten mittels eines Bilderkennungsprogramms, das auf einer Recheneinheit (11) abläuft.

7. Verfahren nach einem der vorhergehenden Ansprüche, **gekennzeichnet durch** Anzeigen der thermografischen Bilddaten auf einer Anzeigeeinheit (10).

8. Anordnung (1) zur Durchführung des vorstehenden Verfahrens zum Erkennen einer Leckage bei der Herstellung eines Faserverbundbauteils umfassend einen vakuumabgedichteten Aufbau (2), der mittels einer Drucksenke (7) evakuierbar ist, wobei der vakuumabgedichtete Aufbau ein formgebendes Werkzeug, ein Fasermaterial sowie eine Vakuumverpackung aufweist, mit mindestens einen thermografischen Bildsensor (9), der zum Aufnehmen von thermografischen Bilddaten von dem evakuierten, vakuumabgedichteten Aufbau (2) eingerichtet ist, und eine Recheneinheit (11), die zum Ermitteln von Temperaturdifferenzen an dem vakuumabgedichteten Aufbau (2) aus den thermografischen Bilddaten und zum Erkennen einer Leckage an dem vakuumabgedichteten Aufbau (2) in Abhängigkeit von den ermittelten Temperaturdifferenzen eingerichtet ist.

9. Anordnung (1) nach Anspruch 8, **gekennzeichnet durch** mindestens eine Wärmequelle (8) oder -senke, die zum Verändern der Temperatur des vakuumabgedichteten Aufbaus (2) gegenüber der Umgebungsluft des Aufbaus (2) eingerichtet ist.

10. Anordnung (1) nach Anspruch 8, **gekennzeichnet durch** mindestens eine Wärmequelle oder -senke, die zum Verändern der Umgebungslufttemperatur gegenüber der Temperatur des vakuumabgedichteten Aufbaus (2) eingerichtet ist.

11. Anordnung (1) nach einem der Ansprüche 8 bis 10, **gekennzeichnet durch** ein auf der Recheneinheit (11) ablaufendes Bilderkennungsprogramm, das zum Ermitteln der Temperaturdifferenzen aus den thermografischen Bilddaten eingerichtet ist.

## Claims

1. Method for detecting a leak (12) on a vacuum-sealed structure (2) during the manufacture of a composite fibre component, which structure (2) can be evacuated by means of a pressure sink (7), wherein the vacuum-sealed structure has a shaping tool, a fibre material and a vacuum packaging, **characterized by** recording of thermographic image data of the evacuated, vacuum-sealed structure (2) by means of at least one thermographic image sensor (9), determining temperature differences on the vacuum-sealed structure (2) from the thermographic image data, and detecting a leak (12) on the vacuum-sealed structure (2) as a function of the determined temperature differences.

2. Method according to Claim 1, **characterized by** changing the temperature of the vacuum-sealed structure (2) with respect to the ambient air of the structure (2) by means of at least one heat source (8) or heat sink.

3. Method according to Claim 2, **characterized by** increasing the temperature of the vacuum-sealed structure (2) by means of a heat radiator (8) which is aligned with the vacuum-sealed structure (2).

4. Method according to Claim 1, **characterized by** changing the temperature of the ambient air with respect to the temperature of the vacuum-sealed structure (2) by means of at least one heat source or heat sink.

5. Method according to one of the preceding claims, **characterized by** detecting the position of the leak (12) as a function of the position of the temperature differences on the vacuum-sealed structure (2).

6. Method according to one of the preceding claims, **characterized by** determining the temperature differences on the vacuum-sealed structure (2) from the thermographic image data by means of an image recognition program which runs on a computer unit (11).

7. Method according to one of the preceding claims, **characterized by** displaying the thermographic image data on a display unit (10).

8. Arrangement (1) for carrying out the above method for detecting a leak during the manufacture of a composite fibre component comprising a vacuum-sealed structure (2) which can be evacuated by means of a pressure sink (7), wherein the vacuum-sealed structure has a shaping tool, a fibre material and a vacuum packaging, having at least one thermographic image sensor (9) which is configured to record thermographic image data of the evacuated, vacuum-sealed structure (2), and a computer unit (11) which is configured to determine temperature differences on the vacuum-sealed structure (2) from the thermographic image data and to detect a leak on the vacuum-sealed structure (2) as a function of the determined temperature differences.

9. Arrangement (1) according to Claim 8, **characterized by** at least one heat source (8) or heat sink which is configured to change the temperature of the vacuum-sealed structure (2) with respect to the ambient air of the structure (2).

10. Arrangement (1) according to Claim 8, **characterized by** at least one heat source or heat sink which is configured to change the temperature of the ambient air with respect to the temperature of the vacuum-sealed structure (2).

11. Arrangement (1) according to one of Claims 8 to 10, **characterized by** an image recognition program which runs on the computer unit (11) and is configured to determine the temperature differences from the thermographic image data.

## Revendications

1. Procédé destiné à détecter une fuite (12) sur une structure (2) étanchéifiée au vide lors de la fabrication d'un élément composite fibreux qui est évacuable au moyen d'un réducteur de pression (7), la structure étanchéifiée au vide comportant un outil de façonnage, une matière fibreuse, ainsi qu'un emballage sous vide, **caractérisé par** l'enregistrement de données-images thermographiques de la structure (2) évacuée, étanchéifiée au vide par au moins un capteur d'images (9) thermographique, la détermination de températures différentielles sur la structure (2) étanchéifiée au vide à partir des données-images thermographiques et la détection d'une fuite (12) sur la structure (2) étanchéifiée au vide en fonction des températures différentielles déterminées.

2. Procédé selon la revendication 1, **caractérisé par** la modification de la température de la structure (2) étanchéifiée au vide par rapport à l'air ambiant de la structure (2) par au moins une source thermique (8) ou un dissipateur thermique.

3. Procédé selon la revendication 2, **caractérisé par** l'augmentation de la température de la structure (2) étanchéifiée au vide par un radiateur thermique (8) orienté sur la structure (2) étanchéifiée au vide.

4. Procédé selon la revendication 1, **caractérisé par** la modification de la température de l'air ambiant par rapport à la température de la structure (2) étanchéifiée au vide par au moins une source thermique ou un dissipateur thermique.

5. Procédé selon l'une quelconque des revendications précédentes, **caractérisé par** la détection de la position de la fuite (12) en fonction de la position des températures différentielles sur la structure (2) étanchéifiée au vide.

6. Procédé selon l'une quelconque des revendications précédentes, **caractérisé par** la détermination des températures différentielles sur la structure (2) étanchéifiée au vide à partir des données-images thermographiques, au moyen d'un programme de reconnaissance d'image qui s'exécute sur une unité informatique (11).

7. Procédé selon l'une quelconque des revendications précédentes, **caractérisé par** l'affichage des données-images thermographiques sur une unité d'affichage (10).

8. Agencement (1) destiné à réaliser le procédé précédent pour la détection d'une fuite lors de la fabrication d'un élément composite fibreux, comprenant une structure (2) étanchéifiée au vide, qui est évacuable au moyen d'un réducteur de pression (7), la structure étanchéifiée au vide comportant un outil de façonnage, une matière fibreuse, ainsi qu'un emballage sous vide, avec au moins un détecteur d'images (9) thermographique qui est installé pour enregistrer des données-images thermographiques de la structure (2) évacuée, étanchéifiée au vide et une unité informatique (11) qui est installée pour déterminer des températures différentielles sur la structure (2) étanchéifiée au vide à partir des données-images thermographiques et pour détecter une fuite sur la structure (2) étanchéifiée au vide, en fonction des températures différentielles déterminées.

9. Agencement (1) selon la revendication 8, **caractérisé par** au moins une source thermique (8) ou un dissipateur thermique, qui est installé(e) pour modifier la température de la structure (2) étanchéifiée au vide par rapport à l'air ambiant de la structure (2).

10. Agencement (1) selon la revendication 8, **caractérisé par** au moins une source thermique ou un dissipateur thermique, qui est installé(e) pour modifier la température de l'air ambiant, par rapport à la température de la structure (2) étanchéifiée au vide.

11. Agencement (1) selon l'une quelconque des revendications 8 à 10, **caractérisé par** un programme de reconnaissance d'image s'exécutant sur l'unité informatique (11) qui est installé pour déterminer les températures différentielles à partir des données-images thermographiques.
